# EUROPÄISCHE PATENTANMELDUNG

(11) **EP 4 737 047 A1**
(43) Veröffentlichungstag der Anmeldung: **06.05.2026**
(21) Anmeldenummer: 24209844.0
(22) Anmeldetag: 30.10.2024
(51) Int. Cl.: B23K 26/08, B23K 26/38, B29C 48/00, B23K 103/00

(54) **ANLAGE UND VERFAHREN ZUR IN-LINE-HERSTELLUNG EINES ZUSCHNITTS AUS EINEM BAHNMATERIAL**

(71) Anmelder: Gebr. Scheidt GmbH, 32051 Herford (DE); Kiessner, Hanko, Salt Lake City, Utah 84124 (US)
(72) Erfinder: Kiessner, Hanko, Salt Lake City, UT 84124 (US); Scheidt, Markus, 32120 Hiddenhausen (DE)
(74) Vertreter: Ter Meer Steinmeister & Partner

(57) **Zusammenfassung**

Anlage (10) zur In-Line-Herstellung eines Zuschnitts (50, 52, 54) aus einem Bahnmaterial, umfassend eine Produktionseinrichtung (20) zur Herstellung einer Endlosbahn (30) des Bahnmaterials und eine Schneidvorrichtung (40) zum Ausschneiden des Zuschnitts (50, 52, 54) aus der Endlosbahn (30), die stromabwärts der Produktionseinrichtung (20) angeordnet ist und zumindest einen Schneidkopf (44) umfasst, der zumindest quer zur Laufrichtung (x) der Endlosbahn (30) über diese hinweg beweglich ist, wobei der Betrieb der Schneidvorrichtung (40) in Abhängigkeit von der Laufgeschwindigkeit der Endlosbahn (30) steuerbar ist.

## Beschreibung

Die vorliegende Erfindung betrifft eine Anlage zur In-Line-Herstellung eines Zuschnitts aus einem Bahnmaterial sowie ein entsprechendes Verfahren.

Für verschiedene Anwendungszwecke, beispielsweise für Verpackungen, sind Bahnmaterialien bekannt, die als Endlosbahnen produziert werden. Beispielsweise sind Materialien aus Kunststoff bekannt, etwa aus Polypropylen (PP), die im Extrusionsverfahren rationell als Endlosmaterial herzustellen sind. Solche Bahnmaterialien aus Kunststoff können auch als Hohlkammer-Stegplatten extrudiert werden, die in ihrem Inneren eine Hohlkammerstruktur aufweisen. Bekannt sind außerdem Bahnmaterialien aus Vollpappe oder Wellpappe, wobei letztere ebenfalls einer Innenprofilstruktur aufweist.

In den bisher üblichen Produktionsanlagen werden solche Endlosbahnen aus Kunststoff- oder Papiermaterialien am Ende der Herstellungslinie in rechteckige Bögen geschnitten oder auch zu Rollen aufgewickelt und anschließend zu einer separaten Anlage zur Weiterverarbeitung transportiert. Bei einer solchen Anlage handelt es sich beispielsweise um eine Stanzvorrichtung, in welcher mit Hilfe artikeltypischer Stanzformen Zuschnitte in verschiedenen Größen und Formen ausgestanzt werden.

Nachteilig ist hierbei, dass der Verarbeitungsprozess durch das Sammeln der Bögen (oder auch das Aufrollen der Endlosbahn) zum Weitertransport unterbrochen werden muss. Es findet also keine kontinuierliche Verarbeitung statt. Ferner führt die Erzeugung der Zuschnitte durch Stanzformen zu einer relativ großen Menge an Verschnitt, da es nicht immer möglich ist, eine geometrisch optimale Verteilung der Zuschnitte über diese Fläche zur Minimierung der Zuschnittsreste zu erreichen. Insbesondere muss beim Stanzen stets ein Rand zum Greifen des Materialbogens verbleiben, der nicht für den Zuschnitt des Produkts verwendet werden kann. Dies erhöht den Materialverbrauch und damit die Kosten.

Es ist daher eine Aufgabe der vorliegenden Erfindung, eine Anlage zur Herstellung eines Zuschnitts aus einem Bahnmaterial zu schaffen, welche eine kontinuierliche Produktion und Weiterverarbeitung des als Endlosbahn vorliegenden Materials bei geringerem Verschnitt ermöglicht, so dass eine Materialersparnis und infolgedessen auch eine Kosten- und Ressourcenersparnis erzielt wird.

Diese Aufgabe wird durch eine Anlage mit den Merkmalen des Anspruchs 1 durch ein Verfahren mit den Merkmalen des Anspruchs 9 gelöst.

Die erfindungsgemäße Anlage dient zur In-Line-Herstellung eines Zuschnitts aus einem Bahnmaterial, d.h., das Bahnmaterial wird kontinuierlich produziert und auch weiterverarbeitet. Hierzu umfasst die erfindungsgemäße Anlage eine Produktionseinrichtung zur Herstellung einer Endlosbahn des Bahnmaterials und eine Schneidvorrichtung zum Ausschneiden des Zuschnitts aus der Endlosbahn, die stromabwärts der Produktionseinrichtung angeordnet ist und zumindest ein Schneidkopf umfasst, der zumindest quer zur Laufrichtung der Endlosbahn über diese hinweg beweglich ist. Der Betrieb der Schneidvorrichtung ist in Abhängigkeit von der Laufgeschwindigkeit der Endlosbahn steuerbar.

Der Schneidvorgang kann somit synchron zur Produktion der Endlosbahn erfolgen. Zu diesem Zweck kann die Schneidvorrichtung unmittelbar stromabwärts der Produktionseinrichtung angeordnet sein, beispielsweise unmittelbar hinter einem Extruder für Hohlkammerstegplatten aus Polypropylen. Der Schneidkopf kann dann unmittelbar über die Oberfläche der Endlosbahn bewegt werden, um den Schneidvorgang auszuführen. Eine Bewegung "zumindest quer zur Laufrichtung der Endlosbahn" ist hierbei eine Bewegung, die zumindest eine Komponente senkrecht zu der Laufrichtung der Endlosbahn beinhaltet. Weitere Bewegungskomponenten werden hierdurch nicht ausgeschlossen, so dass der Schneidkopf sich frei über die Ebene der produzierten Endlosbahn bewegen und der zu erzeugenden Kontur des Zuschnitts folgen kann.

Die Steuerung der Schneidvorrichtung, insbesondere des Schneidkopfs, in Abhängigkeit von der Laufgeschwindigkeit der Endlosbahn kann durch eine Steuereinrichtung realisiert werden, welche die Laufgeschwindigkeit durch geeignete Sensoren misst und diese als Eingangsgröße für die Steuerung der Schneidvorrichtung verwendet. Der Betrieb der Produktionseinrichtung und der Schneidvorrichtung sind dann unmittelbar aneinander gekoppelt, so dass die In-Line-Herstellung des Zuschnitts möglich wird.

Die Zuschnitte des Bahnmaterials werden also innerhalb einer einzigen Anlage erzeugt. Es ist nicht notwendig, das Bahnmaterial in einem Zwischenschritt in Bögen oder Rollen zu sammeln und zu einer getrennten Anlage zur Weiterverarbeitung zu transportieren.

Zudem bietet das Zuschneiden mittels eines Schneidkopfes gegenüber einer Stanzvorrichtung den Vorteil, dass die Zuschnitte platzsparend auf der Endlosbahn angeordnet werden können und die volle Breite der Endlosbahn hierfür genutzt werden kann. Es entsteht deutlich weniger Verschnitt und Material wird eingespart.

Im Folgenden werden bevorzugte Ausführungsformen der Erfindung beschrieben.

Vorzugsweise ist der Schneidkopf zusätzlich in und/oder entgegen der Laufrichtung der Endlosbahn beweglich. Es ergibt sich somit eine freie Beweglichkeit in verschiedenen Raumrichtungen in einer Ebene über die Endlosbahn hinweg. Der Schneidkopf kann hierbei nach Art eines Schneidplotters mit einem kartesischen Koordinatensystem über die Endlosbahn bewegt werden.

Weiter vorzugsweise ist der Schneidkopf entlang einer Führungsschiene, die sich senkrecht zur Laufrichtung der Endlosbahn über diese hinweg erstreckt, verschiebbar.

Gemäß einer weiteren Ausführungsform ist der Schneidkopf mittels einer an der Führungsschiene angebrachten weiteren Führungseinrichtung in und/oder entgegen der Laufrichtung der Endlosbahn verschiebbar, oder die Führungsschiene selbst ist gemeinsam mit dem Schneidkopf in und/oder entgegen der Laufrichtung der Endlosbahn verschiebbar.

Bei der weiteren Führungseinrichtung kann es sich beispielsweise um eine weitere Führungsschiene handeln, die sich in der Laufrichtung der Endlosbahn und damit senkrecht zur ersten, sich senkrecht zur Laufrichtung der Endlosbahn erstreckenden Führungsschiene erstreckt. Es sind allerdings auch Ausführungsformen denkbar, in welchen die erste Führungsschiene selbst entlang der Laufrichtung verschoben werden kann.

Gemäß einer weiteren bevorzugten Ausführungsform der Erfindung ist der Schneidkopf dazu vorgesehen, das Bahnmaterial durch mechanische Einwirkung, durch thermische Einwirkung oder durch eine Kombination aus mechanischer und thermischer Einwirkung zu durchtrennen. Denkbar ist beispielsweise die Verwendung eines Druckluftstrahls, eines Wasserstrahls oder eines Infrarot-Wärmestrahls zum Durchtrennen des Bahnmaterials.

Vorzugsweise ist der Schneidkopf als Laserschneidkopf ausgebildet. Das Durchtrennen des Bahnmaterials geschieht hierbei also durch Einwirkung eines Laserstrahls.

Weiter vorzugsweise ist die Produktionseinrichtung eine Extrusionseinrichtung. Hierbei kann es sich um einen Extruder zur Erzeugung eines Kunststoff-Hohlkammerprofils als Bahnmaterial handeln. Der Kunststoff kann beispielsweise Polypropylen (PP) sein.

Die Erfindung betrifft ferner ein Verfahren zur In-Line-Herstellung eines Zuschnitts aus einem Bahnmaterial, umfassend die folgenden Schritte:
- Herstellung einer Endlosbahn des Bahnmaterials,
- Ausschneiden des Zuschnitts aus der Endlosbahn mittels einer Schneidvorrichtung mit zumindest einem Schneidkopf, der zumindest quer zur Laufrichtung der Endlosbahn über diese hinweg beweglich ist,
wobei der Betrieb der Schneidvorrichtung in Abhängigkeit von der Laufgeschwindigkeit der Endlosbahn gesteuert wird.

Gemäß einer bevorzugten Ausführungsform dieses Verfahrens wird der Schneidkopf zusätzlich in und/oder entgegen der Laufrichtung der Endlosbahn bewegt.

Weiter vorzugsweise durchtrennt der Schneidkopf während des Schneidvorgangs das Bahnmaterial durch mechanische Einwirkung, durch thermische Einwirkung oder durch eine Kombination aus mechanischer und thermischer Einwirkung.

Gemäß einer bevorzugten Ausführungsform dieses Verfahrens durchtrennt der Schneidkopf das Bahnmaterial durch Laserschneiden.

Vorzugsweise wird die Endlosbahn des Bahnmaterials durch Extrusion hergestellt.

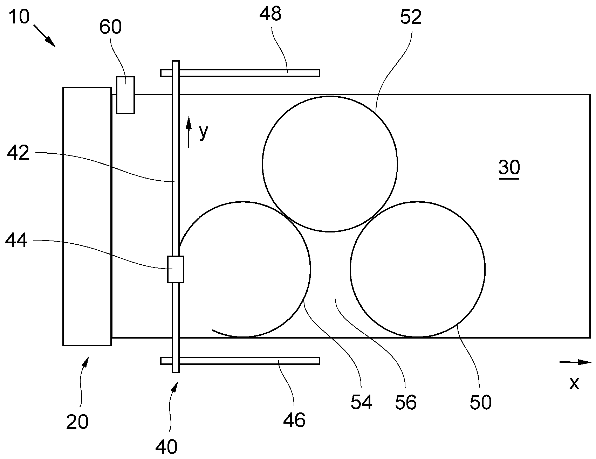

Im Folgenden wird ein bevorzugtes Ausführungsbeispiel der vorliegenden Erfindung anhand der Zeichnung näher erläutert.

Die einzige Figur zeigt eine schematische Draufsicht auf eine Ausführungsform der erfindungsgemäßen Anlage.

Die in der Figur gezeigte Anlage 10 umfasst eine Produktionseinrichtung 20 zur Herstellung einer Endlosbahn 30 eines Bahnmaterials. Im vorliegenden Fall handelt es sich bei dem Bahnmaterial um einen Kunststoff wie beispielsweise Polypropylen (PP), das als Hohlkammerprofil produziert wird. Zu diesem Zweck ist die Produktionseinrichtung 20 im vorliegenden Ausführungsbeispiel als Extrusionseinrichtung ausgebildet. Die Dicke der Endlosbahn 30 kann beispielsweise 1,5 mm bis 5 mm betragen.

Die Endlosbahn 30 verlässt die Produktionseinrichtung 20 in einer Richtung, die nachfolgend als Laufrichtung x der Endlosbahn 30 bezeichnet werden soll. In der Figur liegt die Ebene der Endlosbahn 30 in der Zeichnungsebene und die Laufrichtung x weist nach rechts.

Die frisch extrudierte Endlosbahn 30 ist auf einem nicht näher dargestellten Bett abgestützt, über welchem eine Schneidvorrichtung 40 zum Ausschneiden eines Zuschnitts aus der Endlosbahn 30 angeordnet ist. Im Einzelnen umfasst die Schneidvorrichtung 40 eine Führungsschiene 42, die sich senkrecht zur Laufrichtung x der Endlosbahn 30 über diese hinweg erstreckt. Entlang dieser Führungsschiene 42 ist ein Schneidkopf 44 quer zur Laufrichtung der Endlosbahn und über diese hinweg beweglich. Im vorliegenden Fall ist die Schiene 42 so bemessen, dass der Schneidkopf 44 sich über die gesamte Länge der Schiene 42 und über die gesamte Breite der Endlosbahn 30 bewegen kann.

Ferner umfasst die Schneidvorrichtung 40 ein Paar weiterer Schienen 46, 48, die zu beiden Seiten der Endlosbahn 30 angeordnet sind und die sich entlang der Laufrichtung der Endlosbahn 30 erstrecken. Entlang dieser weiteren Schienen 46, 48 ist die dazu senkrechte Führungsschiene 42 in und entgegen der Laufrichtung x der Endlosbahn 30 gemeinsam mit dem Schneidkopf 44 verschiebbar.

Die Führungsschiene 42 und das Paar weiterer Schienen 46, 48 bilden zusammen mit dem Schneidkopf 44 einen Schneidplotter, durch welchen der Schneidkopf 44 in einem kartesischen Koordinatensystem über die Oberfläche der Endlosbahn 30 geführt werden kann. Die Abszisse dieses Koordinatensystems stellt die Laufrichtung x dar, während die Ordinate der Erstreckungsrichtung der Führungsschiene 42 für den Schneidkopf 44 entspricht, also der Querrichtung y zur Laufrichtung x.

Der Schneidkopf 44 ist im vorliegenden Fall als Laserschneidkopf ausgebildet und dazu vorgesehen, Zuschnitte 50, 52, 54 aus der Endlosbahn 30 auszuschneiden. Lediglich beispielshaft sind die Konturen dieser Zuschnitte 50, 52, 54 hier als Kreise oder Ronden dargestellt, die entlang ihrer Nummerierung in der Endlosbahn 30 hergestellt werden, d.h. die Herstellung des Zuschnitts 52 folgt auf die Herstellung des Zuschnitts 50, während die Herstellung des Zuschnitts 54 wiederum auf den Zuschnitt 52 folgt.

Der Zuschnitt 54 ist in der Darstellung der Figur noch nicht vervollständigt, d.h. die Darstellung stellt eine Momentaufnahme des Ausschneidens des Zuschnitts 54 durch den Schneidkopf 44 dar. Bei der Darstellung der Zuschnitte 50, 52, 54 handelt es sich im Übrigen lediglich um eine beispielhafte Auswahl, und es versteht sich, dass die Zuschnitte 50, 52, 54 in einer endlosen Abfolge entlang der Laufrichtung x hergestellt werden können.

Zur Herstellung der Zuschnitte 50, 52, 54 muss der Schneidkopf 44 kreisförmig in Bezug auf die Oberfläche der Endlosbahn 30 bewegt werden, während die Endlosbahn 30 sich gleichzeitig in der Laufrichtung x bewegt. Damit die Kontur der Zuschnitte 50, 52, 54 geometrisch exakt geschnitten werden kann, fließt die Laufgeschwindigkeit der Endlosbahn 30 in die Steuerung des Betriebs der Schneidvorrichtung 40 ein. Hierzu umfasst die Anlage 10 einen Sensor 60 zur Messung der aktuellen Geschwindigkeit der Endlosbahn 30. Das Ausgangssignal dieses Sensors 60 wird von einer nicht näher dargestellten Steuervorrichtung aufgenommen, welche die Bewegung des Schneidkopfs 44 während des Ausschneidens des Zuschnitts 50, 52, 54 steuert.

Die vorliegende Anlage 10 eignet sich somit zur In-Line-Herstellung von Zuschnitten 50, 52, 54 aus einer kontinuierlich produzierten Endlosbahn 30 ohne Zwischenschritte. Insbesondere ist es nicht erforderlich, dass von der Produktionseinrichtung 20 (also im vorliegenden Beispiel: der Extrusionseinrichtung) produzierte Bahnmaterial der Endlosbahn 30 zunächst zu sammeln und zu einer weiteren Bearbeitungsstation zu transportieren, in welcher die Zuschnitte daraus erzeugt werden. Vielmehr stellen die Zuschnitte 50, 52, 54 unmittelbare Produkte der Anlage 10 dar. Sie können dann unmittelbar aus dem umgebenden Material 56 der Endlosbahn 30 entfernt werden, welches dann als Verschnitt 56 einer Wiederverwertung zugeführt oder entsorgt werden.

Abweichend von der vorliegenden Ausführungsform kann der Schneidkopf 44 dazu vorgesehen sein, das Bahnmaterial durch mechanische Einwirkung zu durchtrennen, etwa durch einen Druckluftstrahl oder einen Wasserstrahl, oder aber auch durch thermische Einwirkung wie etwa Infrarotstrahlung. Eine Kombination solcher Verfahren, auch eine solche, die die Verwendung von Laserlicht einschließt, ist im Rahmen der vorliegenden Erfindung denkbar.

Im Übrigen kann die im vorliegenden Fall verwendete Extrusionseinrichtung durch eine andere Art von Produktionseinrichtung 20 ersetzt werden. Beispielsweise kann es sich bei dem Bahnmaterial um Vollpappe oder Wellpappe handeln, die durch die Produktionsrichtung 20 im Endlosverfahren hergestellt wird.

## Patentansprüche

1. Anlage (10) zur In-Line-Herstellung eines Zuschnitts (50, 52, 54) aus einem Bahnmaterial, umfassend eine Produktionseinrichtung (20) zur Herstellung einer Endlosbahn (30) des Bahnmaterials und eine Schneidvorrichtung (40) zum Ausschneiden des Zuschnitts (50, 52, 54) aus der Endlosbahn (30), die stromabwärts der Produktionseinrichtung (20) angeordnet ist und zumindest einen Schneidkopf (44) umfasst, der zumindest quer zur Laufrichtung (x) der Endlosbahn (30) über diese hinweg beweglich ist, wobei der Betrieb der Schneidvorrichtung (40) in Abhängigkeit von der Laufgeschwindigkeit der Endlosbahn (30) steuerbar ist.

2. Anlage (10) gemäß Anspruch 1, **dadurch gekennzeichnet, dass** der Schneidkopf (44) zusätzlich in und/oder entgegen der Laufrichtung (x) der Endlosbahn (30) beweglich ist.

3. Anlage (10) gemäß Anspruch 1 oder 2, **dadurch gekennzeichnet, dass** der Schneidkopf (44) entlang einer Führungsschiene (42), die sich senkrecht zur Laufrichtung (x) der Endlosbahn (30) über diese hinweg erstreckt, verschiebbar ist.

4. Anlage (10) gemäß Anspruch 3, **dadurch gekennzeichnet, dass** der Schneidkopf (44) mittels einer an der Führungsschiene angebrachten weiteren Führungseinrichtung (46, 48) in und/oder entgegen der Laufrichtung (x) der Endlosbahn (30) verschiebbar ist, der die Führungsschiene (42) selbst gemeinsam mit dem Schneidkopf (44) in und/oder entgegen der Laufrichtung (x) der Endlosbahn (30) verschiebbar ist.

5. Anlage (10) gemäß einem der vorhergehenden Ansprüche, **dadurch gekennzeichnet, dass** der Schneidkopf (44) dazu vorgesehen ist, das Bahnmaterial durch mechanische Einwirkung, durch thermische Einwirkung oder durch eine Kombination aus mechanischer und thermischer Einwirkung zu durchtrennen.

6. Anlage (10) gemäß einem der vorhergehenden Ansprüche, **dadurch gekennzeichnet, dass** der Schneidkopf (44) als Laserschneidkopf ausgebildet ist.

7. Anlage (10) gemäß einem der vorhergehenden Ansprüche, **dadurch gekennzeichnet, dass** die Produktionseinrichtung (20) eine Extrusionseinrichtung umfasst.

8. Verfahren zur In-Line-Herstellung eines Zuschnitts (50, 52, 54) aus einem Bahnmaterial, umfassend die folgenden Schritte:
- Herstellung einer Endlosbahn (30) des Bahnmaterials,
- Ausschneiden des Zuschnitts (50, 52, 54) aus der Endlosbahn (30) mittels einer Schneidvorrichtung (40) mit zumindest einem Schneidkopf (44), der zumindest quer zur Laufrichtung (x) der Endlosbahn (30) über diese hinweg beweglich ist,
wobei der Betrieb der Schneidvorrichtung (40) in Abhängigkeit von der Laufgeschwindigkeit der Endlosbahn (30) gesteuert wird.

9. Verfahren gemäß Anspruch 8, **dadurch gekennzeichnet, dass** der Schneidkopf (44) zusätzlich in und/oder entgegen der Laufrichtung (x) der Endlosbahn (30) bewegt wird.

10. Verfahren gemäß einem der Ansprüche 8 oder 9, **dadurch gekennzeichnet, dass** der Schneidkopf (44) während des Schneidvorgangs das Bahnmaterial durch mechanische Einwirkung, durch thermische Einwirkung oder durch eine Kombination aus mechanischer und thermischer Einwirkung durchtrennt.

11. Verfahren gemäß einem der Ansprüche 8 bis 10, **dadurch gekennzeichnet, dass** der Schneidkopf (44) das Bahnmaterial durch Laserschneiden durchtrennt.

12. Verfahren gemäß einem der Ansprüche 8 bis 11, **dadurch gekennzeichnet, dass** die Endlosbahn (30) des Bahnmaterials durch Extrusion hergestellt wird.

## Geänderte Patentansprüche

### Geänderte Patentansprüche gemäss Regel 137(2) EPÜ.

1. Anlage (10) zur In-Line-Herstellung von Zuschnitten (50, 52, 54) aus einem Bahnmaterial, umfassend eine Produktionseinrichtung (20) zur Herstellung einer Endlosbahn (30) des Bahnmaterials, **gekennzeichnet durch** eine Schneidvorrichtung (40) zum Ausschneiden einer Abfolge über die Endlosbahn (30) verteilter Zuschnitte (50, 52, 54) aus umgebendem Material (56) der Endlosbahn (30), die stromabwärts der Produktionseinrichtung (20) angeordnet ist und zumindest einen Schneidkopf (44) umfasst, der zumindest quer zur Laufrichtung (x) der Endlosbahn (30) und zusätzlich in und/oder entgegen der Laufrichtung (x) der Endlosbahn (30) über diese hinweg beweglich ist, um den Konturen der Zuschnitte (50, 52, 54) während der Bewegung der Endlosbahn (30) zu folgen, wobei der Betrieb der Schneidvorrichtung (40) in Abhängigkeit von der Laufgeschwindigkeit der Endlosbahn (30) steuerbar ist.

2. Anlage (10) gemäß Anspruch 1, **dadurch gekennzeichnet, dass** der Schneidkopf (44) entlang einer Führungsschiene (42), die sich senkrecht zur Laufrichtung (x) der Endlosbahn (30) über diese hinweg erstreckt, verschiebbar ist.

3. Anlage (10) gemäß Anspruch 2, **dadurch gekennzeichnet, dass** der Schneidkopf (44) mittels einer an der Führungsschiene angebrachten weiteren Führungseinrichtung (46, 48) in und/oder entgegen der Laufrichtung (x) der Endlosbahn (30) verschiebbar ist, der die Führungsschiene (42) selbst gemeinsam mit dem Schneidkopf (44) in und/oder entgegen der Laufrichtung (x) der Endlosbahn (30) verschiebbar ist.

4. Anlage (10) gemäß einem der vorhergehenden Ansprüche, **dadurch gekennzeichnet, dass** der Schneidkopf (44) dazu vorgesehen ist, das Bahnmaterial durch mechanische Einwirkung, durch thermische Einwirkung oder durch eine Kombination aus mechanischer und thermischer Einwirkung zu durchtrennen.

5. Anlage (10) gemäß einem der vorhergehenden Ansprüche, **dadurch gekennzeichnet, dass** der Schneidkopf (44) als Laserschneidkopf ausgebildet ist.

6. Anlage (10) gemäß einem der vorhergehenden Ansprüche, **dadurch gekennzeichnet, dass** die Produktionseinrichtung (20) eine Extrusionseinrichtung umfasst.

7. Verfahren zur In-Line-Herstellung von Zuschnitten (50, 52, 54) aus einem Bahnmaterial, umfassend die folgenden Schritte:
- Herstellung einer Endlosbahn (30) des Bahnmaterials,
- Ausschneiden einer Abfolge über die Endlosbahn (30) verteilter Zuschnitte (50, 52, 54) aus umgebendem Material (56) der Endlosbahn (30) mittels einer Schneidvorrichtung (40) mit zumindest einem Schneidkopf (44), der den Konturen der Zuschnitte (50, 52, 54) während der Bewegung der Endlosbahn (30) folgt und zumindest quer zur Laufrichtung (x) der Endlosbahn (30) und zusätzlich in und/oder entgegen der Laufrichtung (x) der Endlosbahn (30) über diese hinweg beweglich ist,
wobei der Betrieb der Schneidvorrichtung (40) in Abhängigkeit von der Laufgeschwindigkeit der Endlosbahn (30) gesteuert wird.

8. Verfahren gemäß Anspruch 7, **dadurch gekennzeichnet, dass** der Schneidkopf (44) während des Schneidvorgangs das Bahnmaterial durch mechanische Einwirkung, durch thermische Einwirkung oder durch eine Kombination aus mechanischer und thermischer Einwirkung durchtrennt.

9. Verfahren gemäß einem der Ansprüche 7 oder 8, **dadurch gekennzeichnet, dass** der Schneidkopf (44) das Bahnmaterial durch Laserschneiden durchtrennt.

10. Verfahren gemäß einem der Ansprüche 7 bis 9, **dadurch gekennzeichnet, dass** die Endlosbahn (30) des Bahnmaterials durch Extrusion hergestellt wird.
